# EUROPÄISCHE PATENTSCHRIFT

(11) **EP 3 034 360 B1**
(45) Veröffentlichungstag und Bekanntmachung des Hinweises auf die Patenterteilung: **07.11.2018**
(21) Anmeldenummer: 15003440.3
(22) Anmeldetag: 03.12.2015
(51) Int. Cl.: B60R 21/201

(54) **TUCH, INSBESONDERE ZUR UMHÜLLUNG FÜR EINEN AUFBLASBAREN GASSACK ZUM SCHUTZ EINER PERSON, UMHÜLLTER AUFBLASBARER GASSACK, GASSACKMODUL UND FAHRZEUGSICHERHEITSSYSTEM**
CLOTH, ESPECIALLY FOR THE COVERING FOR AN INFLATABLE AIRBAG FOR PROTECTING A PERSON, COVERED INFLATABLE AIRBAG, AIRBAG MODULE AND VEHICLE SAFETY SYSTEM
TISSU, EN PARTICULIER DESTINE A ENVELOPPER UN SAC CONTENANT DU GAZ GONFLABLE DESTINE A LA PROTECTION D'UNE PERSONNE, SAC CONTENANT DU GAZ GONFLABLE ENVELOPPE, MODULE DE SAC CONTENANT DU GAZ ET SYSTEME DE SECURITE DE VEHICULE AUTOMOBILE

(30) Priorität: 16.12.2014 DE 202014009882 U
(43) Veröffentlichungstag der Anmeldung: 22.06.2016
(73) Patentinhaber: Dalphi Metal España, S.A., 36213 Vigo (ES)
(72) Erfinder: Padin, José Angel Vega, 36215 Vigo (ES); Muinos, José Carlos Vidal, 36205 Vigo (ES); Ricón, Juan Carlos Rodríguez, 36693 Cesantes (ES); Jesús, Ignacio Malde González, 36320 Chapela (ES)
(74) Vertreter: ZF TRW Patentabteilung

(56) Entgegenhaltungen:
- JP-A- 2011 116 227
- US-A1- 2014 265 269
- US-B1- 6 371 510

## Beschreibung

Die Erfindung betrifft ein Gassackmodul gemäß dem Oberbegriff des Anspruchs 1 sowie ein Verfahren zur Herstellung eines Gassackmoduls.

Aus dem Stand der Technik ist es bekannt, dass gefaltete Fahrerairbags in ein Fahrzeuglenkrad eingebaut werden.

Die US 6 371 510 B1 beschreibt ein Gassackmodul gemäß dem Oberbegriff des Anspruchs 1, aufweisend einen Airbag, einen Gasgenerator zum Aufblasen des Airbags und ein Gehäuse. Der gefaltete Airbag wird um den Gasgenerator herum und in dem Gehäuse platziert. Eine Hülle ist um den Airbag angeordnet und dazu vorgesehen, die Richtung des sich aufblasenden Airbags vorzugeben.

Die US 2014/0265269 A1 beschreibt ein Airbagmodul aus einem Airbag und einem Gasgenerator in einem Gehäuse. Um einen Bruch der Windschutzscheibe während des Aufblasens des Airbags verhindert, ist ein Entfaltungsbegrenzer vorgesehen, um das Aufblasen des Airbags zu begrenzen.

Außerdem ist es bekannt, dass beispielsweise Fahrerairbags mit Rückhalteseilen bzw. Rückhaltekabeln ausgebildet werden, so dass z.B. ein stufenweises Entfalten eines Gassacks möglich ist. Zum anderen dienen Rückhalteseile bzw. Rückhaltekabel zum Zurückhalten des entfaltenden Gassacks, so dass ein Fahrzeuginsasse beispielsweise nicht im Gesicht durch einen zu weit aufgefalteten Gassack verletzt wird. Derartige Rückhaltesysteme sind auch als Tether-Systeme bekannt. Bei der Montage bzw. beim Zusammenbau derartiger Gassackmodule ist es wichtig, dass das Rückhalteseil um eine Aktivierungseinheit straff angebracht wird. Bei den derzeit bekannten Verfahren bzw. Vorrichtungen zum Straffen von derartigen Tethern bzw. Rückhalteseilen ergeben sich Probleme aufgrund dessen, dass bei bereits gepackten und an einer Modulträgerplatte angeordneten Gassäcken wenig Bauraum zum händischen Straffen des Rückhalteseils verbleibt.

Die Aufgabe bei der vorliegenden Erfindung ist es, eine Möglichkeit bereitzustellen, um ein Positionieren und/oder Straffen eines Rückhalteseils bzw. Tethers schneller und einfacher durchzuführen.

Erfindungsgemäß wird diese Aufgabe durch ein Gassackmodul mit den Merkmalen des Anspruchs 1 sowie durch ein Verfahren zur Herstellung eines Gassackmoduls mit den Merkmalen des Anspruchs 11 gelöst.

Vorteilhafte und zweckmäßige Ausgestaltungen des erfindungsgemäßen Gassackmoduls bzw. des erfindungsgemäßen Verfahrens sind in den Unteransprüchen angegeben.

Ein Tuch des Gassackmoduls betrifft insbesondere eine Umhüllung für einen aufblasbaren Gassack zum Schutz einer Person. Da das erfindungsgemäße Tuch auch für andere Zwecke verwendet werden kann, wird im Folgenden davon ausgegangen, dass das Tuch sowohl als Umhüllung für einen aufblasbaren Gassack Verwendung findet, als auch für eine andere Anwendung ausgebildet ist.

Das Tuch ist aus mehreren um einen Tuchmittelpunkt herum angeordnete Flächenabschnitte gebildet, wobei an mindestens einem äußeren Ende eines ersten Flächenabschnitts ein als Positionierungs- und/oder Straffungshilfe ausgebildeter Fortsatz ausgebildet ist, der eine Länge aufweist, die mindestens der Hälfte der Länge des Flächenabschnitts entspricht.

Bei der Länge des Fortsatzes handelt es sich vorzugsweise um die Länge, die durch die Mittellinie des Fortsatzes gebildet wird. Je nach geometrischer Ausbildung des Fortsatzes kann die Mittellinie abschnittsweise gerade und/oder gebogen verlaufen. Bei gebogen ausgeführten Teilabschnitten eines Fortsatzes entspricht die Mittellinie beispielsweise einer gedachten Linie im Sinne einer neutralen Faser. Bei geraden geometrischen Formen des Fortsatzes kann die Mittellinie beispielsweise einer Symmetrielinie entsprechen.

Die Länge des Flächenabschnitts wird ausgehend von dem Tuchmittelpunkt bis zu einer äußeren Kante des ersten Flächenabschnitts bestimmt. Vorzugsweise wird ausgehend vom Tuchmittelpunkt eine Senkrechte zur äußeren Kante des Flächenabschnitts gezogen, wobei diese Senkrechte die Länge des Flächenabschnitts definiert. Etwaige Verbreiterungen der Flächenabschnitte in den Eckbereichen, die beispielsweise über die äußere Kante des Flächenabschnitts hinausstehen können, werden dabei nicht als äußerste bzw. äußere Kante bezeichnet.

Am äußeren Ende des ersten Flächenabschnitts kann zwischen dem Fortsatz und dem ersten Flächenabschnitt eine Schwächungskontur ausgebildet sein. Eine Schwächungskontur dient dazu, dass der Fortsatz beispielsweise nach einem durchgeführten Positionierungs- und/oder Straffungsvorgang eines anderen Bauteils und/oder Elements vom Flächenabschnitt entfernbar bzw. abreißbar ist. Eine Schwächungskontur kann sowohl bogenförmig als auch geradlinig ausgebildet sein. Beispielsweise wird eine Schwächungskontur durch Verringerung der Materialdicke in dem Bereich der Schwächungskontur gebildet. Auch das Vorsehen von einem gestanzten Abschnitt mit abwechselnd vorhandenen Ausnehmungen ist denkbar.

Beispielsweise kann der Fortsatz in einem Eckbereich, der am äußeren Ende des ersten Flächenabschnitts ausgebildet ist, vorgesehen bzw. ausgebildet sein. Der Fortsatz kann als Verlängerung des Eckbereichs eines Flächenabschnitts ausgebildet sein.

In einer weiteren Ausführungsform der Erfindung ist es möglich, dass der Fortsatz, vorzugsweise in Richtung eines zweiten Flächenabschnitts, bogenförmig verläuft. Bei einem bogenförmigen Verlauf des Fortsatzes wird die Mittellinie des Fortsatzes durch eine Bogenlänge bzw. durch eine Kurve im Sinne einer neutralen Faser gebildet.

Das Tuch kann des Weiteren aus vier Flächenabschnitten, die vorzugsweise eine Kreuzform bilden, gebildet sein. Bei der Ausbildung eines Tuches mit vier Flächenabschnitten ist es denkbar, dass diese im Wesentlichen senkrecht zueinander stehen.

Am äußeren Ende des Fortsatzes kann ein Greifabschnitt ausgebildet sein. Dieser dient zum Greifen mit einer Hand, bei einem Positionierungs- und/oder Straffungsvorgang. Der Greifabschnitt kann kreisförmig und/oder oval und/oder ellipsenförmig ausgebildet sein. Des Weiteren ist es denkbar, dass der Greifabschnitt auf Höhe des äußeren Endes eines zweiten Flächenabschnitts ausgebildet ist. Eine derartige Ausbildung des Greifabschnitts ist vor allen Dingen dann denkbar und vorteilhaft, wenn der Fortsatz in Richtung eines zweiten Flächenabschnitts bogenförmig verläuft.

In einer weiteren Ausführungsform ist es denkbar, dass die Bogenlänge des Fortsatzes mindestens der Länge des ersten Flächenabschnitts entspricht. Insgesamt ist der Fortsatz mit zunehmender Länge besser handhabbar und mit einer Hand greifbar.

Der Fortsatz ist nach einem Positionierungs- und/oder Straffungsvorgang vom Tuch entfernbar. Dies ist insofern von Vorteil, dass der Fortsatz nicht mit dem restlichen Tuch beispielsweise in einem Modulgehäuse verpackt und montiert werden muss. Außerdem kann das Entfernen eines Fortsatzes als derartige Markierung dienen, dass bereits eine Positionierung und/oder Straffung in einem Herstellungsverfahren vorgenommen worden ist. Der Fortsatz kann entlang der Schwächungskontur abreißbar ausgebildet sein. Vorzugsweise ist diesbezüglich eine vorgestanzte Kontur ausgebildet, die derart geschwächt ist, dass ein Fortsatz mit leichtem Kraftaufwand vom restlichen Tuch abreißbar ist.

In einer weiteren Ausführungsform der Erfindung ist es denkbar, dass anstelle des Fortsatzes entlang der Schwächungskontur eine Risskante ausgebildet ist. Dies betrifft den Zustand des Tuches, nach dem eine Positionierung und/oder Straffung vorgenommen worden ist. Das Tuch kann beispielsweise aus Polyethylenterephthalat (PET) oder Polyamid (PA) oder Polyethylen (PE), wie bzw. Polyethylen hoher Dichte (PE-HD bzw. HDPE) gebildet sein.

Mit Hilfe des Tuches kann beispielsweise ein Rückhalteseil eines Gassackmoduls einfacher gestrafft werden. Ein Rückhalteseil ist beispielsweise als Tether bekannt.

Ein bevorzugter Aspekt betrifft einen umhüllten aufblasbaren Gassack zum Schutz einer Person, wobei der gefaltete Gassack an einem Modulträger befestigt ist und zumindest abschnittsweise von einem Tuch, insbesondere von einem vorgenannten Tuch, umhüllt ist.

Demnach ist der gefaltete Gassack an einem Modulträger befestigt und zumindest abschnittsweise von einem Tuch umhüllt, wobei der umhüllte Gassack ein schlaufenförmig gelegtes Rückhalteseil aufweist und das Tuch aus mehreren Flächenabschnitten gebildet ist, wobei an mindestens einem äußeren Ende eines ersten Flächenabschnitts ein als Positionierungs- und/oder Straffungshilfe für das Rückhalteseil ausgebildeter Fortsatz ausgebildet ist.

Der Fortsatz ist unter Bildung einer Faltbiegung um das Rückhalteseil bzw. den Tether gewickelt. Mit anderen Worten wird der Fortsatz schlaufenartig um das Rückhalteseil gewickelt, wobei bei der Wicklung wenigstens eine Faltbiegung entsteht. Die Wicklung kann demnach auch als einfache Faltung um das Rückhalteseil unter Bildung mindestens einer Faltbiegung ausgeführt werden. Die Faltbiegung kann zunächst flach, sogar äußerst flach ausgebildet sein.

Der umhüllte aufblasbare Gassack kann des Weiteren in einem Modulgehäuse angeordnet sein, wobei das Modulgehäuse eine Gehäusegrundfläche und mindestens eine Gehäuseseitenfläche, die insbesondere senkrecht zur Gehäusegrundfläche ausgebildet ist, aufweist. Zum Positionieren des umhüllten aufblasbaren Gassacks in dem Modulgehäuse werden am Modulträger befestigte Bolzen in Richtung der Gehäusegrundfläche positioniert. Die Faltbiegung des Fortsatzes nimmt daher zu. In der Gehäuseseitenfläche ist eine Ausnehmung ausgebildet, durch welche das Rückhalteseil bzw. der Tether vom Gehäuseinneren zum Gehäuseäußeren geführt ist. Während das Rückhalteseil durch die Ausnehmung in der Gehäuseseitenfläche vom Gehäuseinneren zum Gehäuseäußeren geführt ist, ist der Fortsatz im Gehäuseinneren angeordnet.

Außerhalb des Modulgehäuses kann in der Schlaufe des Rückhalteseils eine Aktivierungseinheit angeordnet sein derart, dass das Rückhalteseil bei einer Straffung um die Aktivierungseinheit, die insbesondere an der äußeren Gehäuseseitenfläche ausgebildet ist, anliegt. Bei einer Aktivierungseinheit eines Rückhalteseils kann es sich beispielsweise um eine Sprengeinheit und/oder um eine Schneideinheit handeln. Eine derartige Aktivierungseinheit bewirkt im Aktivierungsfall, dass das Rückhalteseil mit entsprechender Verzögerung nach Auslösen des Gassacks getrennt bzw. geschnitten wird, so dass ein Gassack vollständig aufgeblasen werden kann. Die Aktivierungseinheit ist außerhalb des Modulgehäuses angeordnet, wobei das Rückhalteseil straff um die Aktivierungseinheit angelegt ist. Die Aktivierungseinheit weist im Wesentlich eine zylinderförmige Bauteilform auf, sodass die Schlaufe des Rückhalteseils an der runden Außenfläche der Aktivierungseinheit straff anliegen kann.

Die Straffung des Rückhalteseils kann durch Betätigung des als Positionierungs- und/oder Straffungshilfe für das Rückhalteseil ausgebildeten Fortsatzes ausführbar sein. Nachdem der Fortsatz zunächst unter Bildung einer Faltbiegung um das Rückhalteseil gewickelt ist, kann durch Zug am Fortsatz der Kontaktbereich zwischen dem Fortsatz und dem Rückhalteseil, der insbesondere im Bereich der Faltbiegung ausgebildet ist, nach oben und/oder in Richtung des Gehäuseinneren gezogen werden.

Mit Hilfe des Fortsatzes ist eine einfache Straffung des Rückhalteseils um die Aktivierungseinheit durchführbar.

In einer Ausführungsform der Erfindung kann der Fortsatz nach einem Positionierungs- und/oder Straffungsvorgang vom Tuch entfernbar ausgebildet sein. Insbesondere ist es denkbar, dass der Fortsatz entlang einer/der Schwächungskontur abreißbar ausgebildet ist. Demnach ist es denkbar, dass nach einem Positionierungs- und/oder Straffungsvorgang anstelle des Fortsatzes entlang einer/der Schwächungskontur eine Risskante ausgebildet ist.

Das erfindungsgemäße Gassackmodul umfasst einen vorbeschriebenen umhüllten Gassack und ein vorbeschriebenes Tuch. Das bevorzugte Gassackmodul umfasst des Weiteren einen Gasgenerator zum Aufblasen des Gassacks. Außerdem kann ein Modulgehäuse mit einer Gehäusegrundfläche und mindestens einer Gehäuseseitenfläche vorgesehen sein, wobei in der Gehäuseseitenfläche eine Ausnehmung ausgebildet ist, durch welche ein Rückhalteseil vom Gehäuseinneren zum Gehäuseäußeren geführt ist.

Im Allgemeinen betrifft die Erfindung ein Modul, das ein Objekt umfasst, das mit einem Tuch umhüllt ist. Das Objekt kann insbesondere von einem vorgenannten Tuch umhüllt sein. Das umhüllte Objekt ist in einem Modulgehäuse angeordnet und umfasst ein zu straffendes Element, wobei das Tuch aus mehreren Flächenabschnitten gebildet ist und an mindestens einem äußeren Ende eines ersten Flächenabschnitts ein als Positionierungs- und/oder Straffungshilfe für das zu straffende Element ausgebildeter Fortsatz ausgebildet ist. Unter Bildung einer Faltbiegung ist der Fortsatz um das zu straffende Element gewickelt bzw. gelegt.

Der Fortsatz kann nach einem Positionierungs- und/oder Straffungsvorgang vom Tuch entfernbar, insbesondere entlang einer Schwächungskontur abreißbar, ausgebildet sein. Es ist möglich, dass der Fortsatz abgerissen ist und anstelle des Fortsatzes entlang einer/der Schwächungskontur eine Risskante ausgebildet ist.

Die Erfindung betrifft auch ein Fahrzeuginsassenrückhaltesystem, insbesondere einen Fahrerairbag, mit einem oben beschriebenen Gassackmodul umfassend einen umhüllten Gassack und ein Tuch . Es ergeben sich ähnliche Vorteile, wie diese bereits oben im Zusammenhang mit dem Tuch, dem umhüllten Gassack und dem Gassackmodul erläutert wurden.

Im Rahmen der Erfindung wird des Weiteren ein erfindungsgemäßes Verfahren zur Herstellung eines Gassackmoduls angegeben. Das Verfahren zum Herstellen eines Gassackmoduls umfasst die folgenden Schritte:
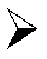 Falten eines Gassacks,
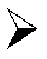 Positionieren des gefalteten Gassacks in Relation zu einem Tuch, das mehrere Flächenabschnitte aufweist, derart, dass die jeweiligen äußeren Enden der Flächenabschnitte über den Gassack hinausragen,
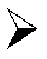 Falten der äußeren Enden der Flächenabschnitte jeweils in Richtung der Mitte des Tuches derart, dass der gefaltete Gassack zumindest abschnittsweise umhüllt wird, wobei ein am Tuch ausgebildeter Fortsatz unter Bildung einer Faltbiegung um ein zu straffendes Element des Gassacks gewickelt bzw. gefaltet wird.

Wahlweise kann ein abschnittsweises Verbinden, insbesondere Verschweißen der äußeren Enden der Flächenabschnitte mit dem Gassack und/oder ein Anordnen von mindestens zwei Flächenabschnitten derart zueinander erfolgen, dass diese zumindest abschnittsweise in einem Überlappungsbereich überlappend angeordnet sind, wobei anschließend ein abschnittsweises Verbinden, insbesondere Verschweißen, von mindestens zwei Flächenabschnitten miteinander im Überlappungsbereich erfolgt.

Anstelle des abschnittsweisen Verbindens, insbesondere Verschweißens der äußeren Enden der Flächenabschnitte mit dem Gassack und/oder von mindestens zwei Flächenabschnitten miteinander in einem Überlappungsbereich kann es vorgesehen sein, dass die äußeren Enden der Flächenabschnitte Löcher aufweisen und über Bolzen von dem Modulträger gezogen bzw. übergestülpt werden.

Anschließend wird der am Tuch ausgebildete Fortsatz unter Bildung einer Faltbiegung um das Rückhalteseil gewickelt bzw. gefaltet.

Es folgt ein Positionieren des umhüllten aufblasbaren Gassacks in einem Modulgehäuse, wobei das Modulgehäuse eine Gehäusegrundfläche und mindestens eine Gehäuseseitenfläche aufweist. In der Gehäuseseitenfläche ist eine Ausnehmung ausgebildet. Durch die Ausnehmung wird das Rückhalteseil vom Gehäuseinneren zum Gehäuseäußeren geführt.

Anschließend wird in der Schlaufe des Rückhalteseils eine Aktivierungseinheit angeordnet, derart, dass das Rückhalteseil bei einer Straffung um die Aktivierungseinheit anliegt. Die Straffung erfolgt durch Betätigung des als Positionierungs- und/oder Straffungshilfe für das Rückhalteseil ausgebildeten Fortsatzes. Die Straffung erfolgt durch Ziehen, insbesondere durch nach oben Ziehen, am Fortsatz. Aufgrund der Zugbewegung wird das Rückhalteseil in das Gehäuseinnere zurückgezogen, wobei die Schlaufe an der außerhalb des Modulgehäuses angeordneten Aktivierungseinheit straff anliegend positioniert wird.

Wahlweise kann ein Entfernen, insbesondere Abreißen des Fortsatzes entlang einer/der Schwächungskontur nach der erfolgten Straffung des Rückhalteseils erfolgen.

Die Erfindung wird im Folgenden anhand von Ausführungsbeispielen unter Bezugnahme auf die beigefügten, schematischen Zeichnungen näher erläutert. Weitere Merkmale und Vorteile der Erfindung ergeben sich aus der nachfolgenden Beschreibung in Verbindung mit diesen Zeichnungen.

Darin zeigen:
Fig. 1 ein Tuch eines erfindungsgemäßen Gassackmoduls;
Fig. 2a bis 2e einen umhüllten, aufblasbaren Gassack eines erfindungsgemäßen Gassackmoduls in verschiedenen Herstellungsstadien.

Im Folgenden werden für gleiche und gleich wirkende Teile gleiche Bezugszeichen verwendet.

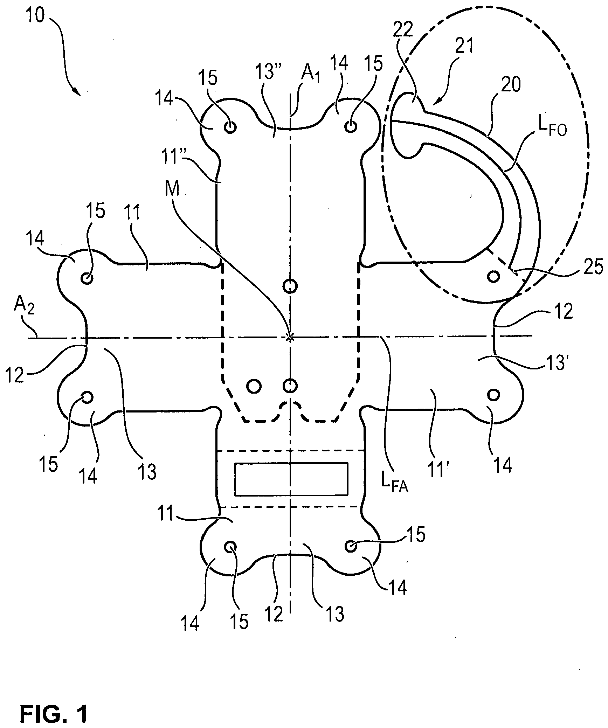

In Fig. 1 ist ein Tuch 10 dargestellt. Das Tuch 10 umfasst vier Flächenabschnitte 11, 11', 11", die eine Kreuzform bilden. Die einzelnen Flächenabschnitte 11, 11', 11" stehen im Wesentlichen senkrecht zueinander. Die Längen L_{FA} der Flächenabschnitte 11, 11', 11" erstrecken sich von der Mitte M des Tuches 10 bis zur jeweiligen äußeren Kante 12 des jeweiligen Flächenabschnitts 11, 11', 11". Die äußeren Kanten 12 sind hinsichtlich der Mitte M des Tuches 10 maximal beabstandet.

Jeweils zwei gegenüberliegende Flächenabschnitte 11, wie z.B. der obere 11" und der untere Flächenabschnitt 11 sind hinsichtlich der durch den linken 11 und den rechten Flächenabschnitt 11' verlaufenden Längsachse A2 achssymmetrisch angeordnet. Auch der linke Flächenabschnitt 11 und der rechte Flächenabschnitt 11' sind
gegenüberliegend angeordnet, wobei diese beiden Flächenabschnitte 11 und 11' im Wesentlichen hinsichtlich der durch den oberen 11" und den unteren Flächenabschnitt 11 verlaufenden Längsachse A₁ achssymmetrisch angeordnet sind.

Die äußeren Enden 13 der Flächenabschnitte 11, 11' und 11" weisen gemäß Fig. 1 jeweils zwei Verbreiterungen 14 auf. Die Verbreiterungen 14 sind in den Eckbereichen der äußeren Enden 13 ausgebildet. Die Verbreiterungen 14 ragen über die Breite B der zugehörigen Flächenabschnitte hinaus. Die Breite B ist als Senkrechte zur Länge L_{FA} eines Flächenabschnitts 11 ausgebildet. Diese Senkrechte ist sowohl von der äußeren Kante 12 als auch von der Mitte M des Tuches 10 beabstandet angeordnet. Die Verbreiterungen 14 verbreitern den Flächenabschnitt 11 somit im Bereich des äußeren Endes 13. Die Verbreiterungen sind insbesondere nicht zur äußeren Kante 12 hinzuzurechnen. Die Länge L_{FA} des Flächenabschnitts ist somit nicht im Zusammenhang mit den Verbreiterungen 14 zu bestimmen.

Das Tuch 10, das insbesondere zur Umhüllung für einen aufblasbaren Gassack zum Schutz einer Person dienen kann, weist am äußeren Ende 13 des in Fig. 1 rechten dargestellten Flächenabschnitts 11' einen Fortsatz 20 auf. Dieser Fortsatz 20 ist als Positionierungs- und/oder Straffungshilfe ausgebildet. Der Fortsatz 20 ist bogenförmig ausgebildet, wobei der Fortsatz 20 in Richtung eines zweiten Flächenabschnitts 11", der in Fig. 1 oben dargestellt ist, verläuft.

Der Krümmungsradius des bogenförmig ausgebildeten Fortsatzes 20 ist demnach in Richtung zum zweiten Flächenabschnitt 11" ausgebildet. Der Fortsatz 20 kann auch als Verlängerung des Flächenabschnitts 11' im oberen Eckbereich des Flächenabschnitts 11' bezeichnet werden. Am äußeren Ende 21 des Fortsatzes 20 ist ein Greifabschnitt 22 ausgebildet, der eine ellipsenförmige Kontur aufweist. Der Greifabschnitt 22 dient zum Greifen mit einer Hand, bei der Durchführung eines Positionierungs- und/oder Straffungsvorgangs. Der Greifabschnitt 22 bzw. das äußere Ende 21 des Fortsatzes 20 ist auf Höhe des äußeren Endes 13" des oberen Flächenabschnitts 11" ausgebildet.

Die Länge L_{FO} des Fortsatzes 20 entspricht mindestens der Hälfte der Länge L_{FA} des Flächenabschnitts 11'. Insbesondere weist die Länge L_{FO} des Fortsatzes 20 mindestens einen derartigen Wert auf, der der Länge L_{FA} des Flächenabschnittes 11' entspricht. Die Länge L_{FO} des Fortsatzes 20 wird im dargestellten Beispiel durch die Mittellinie des Fortsatzes 20 gebildet. Die Mittellinie entspricht bei dem dargestellten Beispiel einer Bogenlänge bzw. einer neutralen Faser. Bei einer geradlinigen Ausbildung des Fortsatzes 20 ist es denkbar, dass die Mittellinie bzw. die Länge L_{FO} ebenfalls geradlinig verläuft.

Am äußeren Ende 13' des ersten Flächenabschnitts 11' ist zwischen dem Fortsatz 20 und dem ersten Flächenabschnitt 11' eine Schwächungskontur 25 ausgebildet. Eine derartige Schwächungskontur 25 kann beispielsweise durch ein Vorstanzen bzw. Lasern hergestellt werden. Die Schwächungskontur ist entweder hinsichtlich der Materialstärke verringert und/oder weist Ausnehmungsabschnitte auf.

Nach einem Positionierungs- und/oder Straffungsvorgang kann der Fortsatz 20 vom Tuch 10 entfernt werden. Hierzu ist der Fortsatz 20 vom Tuch 10 entfernbar ausgebildet. Der Fortsatz 20 kann vorzugsweise entlang der Schwächungskontur 25 abreißbar ausgebildet sein. Die Erfindung betrifft zusätzlich ein Tuch 10, das anstelle des Fortsatzes 20 entlang der Schwächungskontur 25 eine Risskante aufweist.

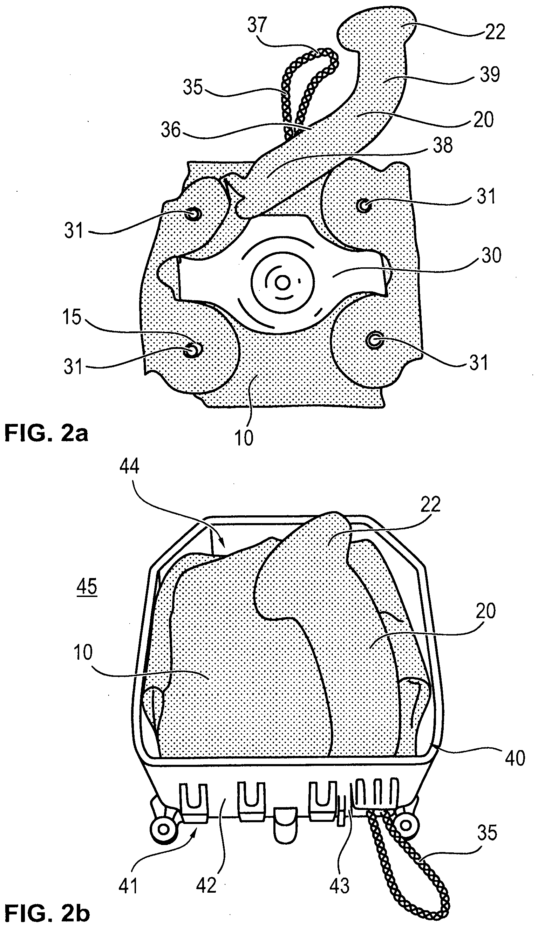

In Fig. 2a wird ein erfindungsgemäß umhüllter aufblasbarer Gassack zum Schutz einer Person dargestellt. Der Gassack (nicht dargestellt) ist an einem Modulträger 10 befestigt. Zu erkennen sind vier Bolzen 31. Das Tuch 10 weist Löcher 15 auf, die über die Bolzen 31 gestülpt werden. So ist der (nicht dargestellte) Gassack mit Hilfe des Tuches 10 am Modulträger 30 befestigt.

Ebenfalls zu erkennen ist ein schlaufenförmig gelegtes Rückhalteseil 35 bzw. Tether. Der Fortsatz 20 wird unter Bildung einer Faltbiegung 36 um das Rückhalteseil 35 gewickelt. Im dargestellten Beispiel wird die Faltbiegung 36 dadurch gebildet, dass der Fortsatz 20 rechts neben dem schlaufenförmig gelegten Rückhalteseil 35 gelegt wird. Zumindest im Bereich der Faltbiegung 36 ist ein Kontaktbereich zwischen dem Fortsatz 20 und dem Rückhalteseil 35 ausgebildet. Hier berührt der Fortsatz 20 das Rückhalteseil 35.

Unter Beibehaltung der Faltbiegung 36 bzw. unter verstärkter Ausbildung der Faltbiegung 36 wird der umhüllte aufblasbare Gassack gemäß Darstellung in Fig. 2b in einem Modulgehäuse 40 angeordnet. Die Bolzen 31 werden demnach nach unten gerichtet in das Modulgehäuse 40 eingeführt. Das Modulgehäuse 40 weist eine Gehäusegrundfläche 41 auf. Diese Gehäusegrundfläche 41 befindet sich im dargestellten Beispiel gemäß Fig. 2b unterhalb des umhüllten aufblasbaren Gassacks. Der vor der Faltbiegung 36 ausgebildete erste Abschnitt 38 des Fortsatzes 20 befindet sich somit auf der Gehäusegrundfläche 41.

Außerdem weist das Modulgehäuse eine Gehäuseseitenfläche 42 auf. Der nach der Faltbiegung 36 ausgebildete zweite Abschnitt 39 des Fortsatzes 20 wird somit nach oben geführt und kann zumindest abschnittsweise an der Gehäuseseitenfläche 42 anliegen. Der größte Teil des zweiten Abschnitts 39 wird auf dem gepackten Gassack abgelegt. Im dargestellten Beispiel ist die Gehäuseseitenfläche 42 im Wesentlichen senkrecht zur Gehäusegrundfläche 41 ausgebildet. In der Gehäuseseitenfläche 42 ist eine Ausnehmung 43 ausgebildet. Durch die Ausnehmung 43 ist das Rückhalteseil 35 vom Gehäuseinneren 44 zum Gehäuseäußeren 45 geführt. Der Fortsatz wird hierbei nicht durch die Ausnehmung 43 zum Gehäuseäußeren 45 geführt.

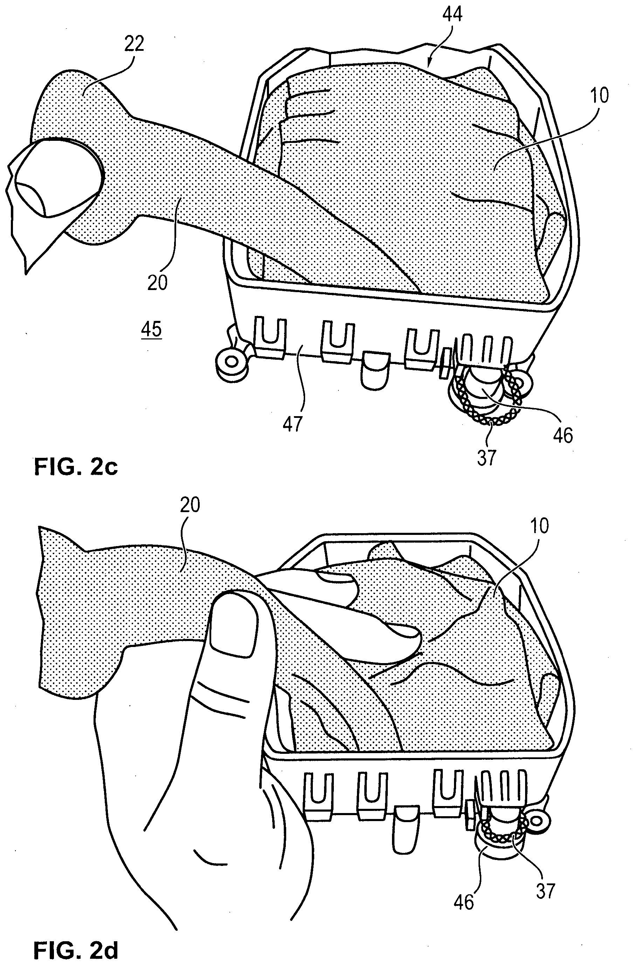

Außerhalb des Modulgehäuses 40 ist in der Schlaufe 37 des Rückhalteseils 35 eine Aktivierungseinheit 46 angeordnet, derart, dass das Rückhalteseil 35 bei einer Straffung um die Aktivierungseinheit 46, die an der äußeren Gehäuseseitenfläche 47 ausgebildet ist, anliegt. In Fig. 2c ist das Rückhalteseil 35 noch nicht gestrafft, so dass die Schlaufe 37 noch nicht direkt an der zylinderförmig ausgebildeten Aktivierungseinheit 46 straff anliegt.

Die Straffung, wie diese in Fig. 2d dargestellt wird, erfolgt durch Ziehen am Fortsatz 20, wobei die Faltbiegung 36 (nicht sichtbar) nach oben gezogen wird. Aufgrund der Zugspannung nach oben wird das Rückhalteseil 35 aufgrund des Ausbildens eines Kontaktbereichs zwischen dem Fortsatz 20 und dem Rückhalteseil 35 in Richtung Gehäuseinneres 44 gezogen. Nach durchgeführtem Straffungsvorgang liegt die Schlaufe 37 straff an der Aktivierungseinheit 46 an.

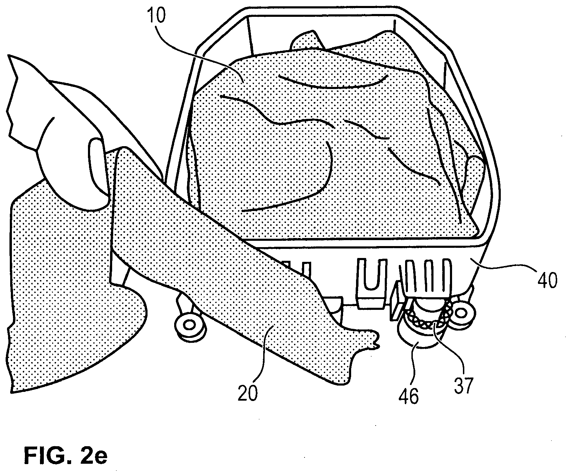

Wie in Fig. 2e dargestellt ist, ist der Fortsatz 20 entlang der Schwächungskontur abreißbar ausgebildet, so dass durch ein kräftiges Ziehen am Fortsatz 20 selbiger vom Tuch 10 abgerissen werden kann. Mit Hilfe des erfindungsgemäßen Tuches 10 ist demnach ein einfacher Straffungsvorgang hinsichtlich des Rückhalteseils 35 möglich. Es muss nicht umständlich mit den Fingern im Modulgehäuse 40 das Rückhalteseil 35 gegriffen und gestrafft werden. Dieser Vorgang ist durch einfaches Ziehen am Fortsatz 20 durchführbar.

### Bezugszeichenliste

- 10: Tuch
- 11, 11', 11": Flächenabschnitt
- 12: äußere Kante
- 13, 13', 13": äußeres Ende
- 14: Verbreiterung
- 15: Loch
- 20: Fortsatz
- 21: äußeres Ende Fortsatz
- 22: Greifabschnitt
- 25: Schwächungskontur
- 30: Modulträger
- 31: Bolzen
- 35: Rückhalteseil
- 36: Faltbiegung
- 37: Schlaufe
- 38: erster Abschnitt Fortsatz
- 39: zweiter Abschnitt Fortsatz
- 40: Modulgehäuse
- 41: Gehäusegrundfläche
- 42: Gehäuseseitenfläche
- 43: Ausnehmung
- 44: Gehäuseinneres
- 45: Gehäuseäußeres
- 46: Aktivierungseinheit
- 47: äußere Gehäuseseitenfläche
- L_{FA}: Länge Flächenabschnitt
- L_{FO}: Länge Fortsatz
- B: Breite
- A₁, A₂: Längsachse
- M: Mitte Tuch

## Patentansprüche

1. Gassackmodul mit
einem Modulgehäuse (40),
einem aufblasbaren Gassack zum Schutz einer Person und
einem Tuch (10) zur Umhüllung des Gassacks, welches aus mehreren um einen Tuchmittelpunkt (M) herum angeordneten Flächenabschnitten (11, 11', 11") gebildet ist,
wobei der umhüllte Gassack im Modulgehäuse (40) angeordnet ist,
**dadurch gekennzeichnet, dass** der umhüllte Gassack ein zu straffendes Element (35) umfasst, wobei an mindestens einem äußeren Ende (13') eines ersten Flächenabschnitts (11') des Tuchs (10) ein als Positionierungs- und/oder Straffungshilfe für das zu straffende Element (35) ausgebildeter Fortsatz (20) ausgebildet ist, der eine Länge (L_{FO}) aufweist, die mindestens der Hälfte der Länge (L_{FA}) des ersten Flächenabschnitts (11') entspricht, und der unter Bildung einer Faltbiegung (36) zumindest abschnittsweise um das zu straffende Element (35) gewickelt ist.

2. Gassackmodul nach Anspruch 1, **dadurch gekennzeichnet, dass** am äußeren Ende (13') des ersten Flächenabschnitts (11') zwischen dem Fortsatz (20) und dem ersten Flächenabschnitt (11') eine Schwächungskontur (25) ausgebildet ist, wobei der Fortsatz (20), vorzugsweise nach einem Positionierungs- und/oder Straffungsvorgang, vom Tuch (10) entfernbar, und insbesondere entlang der Schwächungskontur (25) abreißbar, ausgebildet ist.

3. Gassackmodul nach Anspruch 1 oder 2, **dadurch gekennzeichnet, dass** die vier Flächenabschnitte (11, 11', 11") eine Kreuzform bilden, und/oder dass der Fortsatz (20), vorzugsweise in Richtung eines zweiten Flächenabschnitts (11"), bogenförmig verläuft, wobei, vorzugsweise, eine Bogenlänge des Fortsatzes (20) mindestens der Länge (L_{FA}) des ersten Flächenabschnitts (11') entspricht.

4. Gassackmodul nach einem der vorhergehenden Ansprüche, **dadurch gekennzeichnet, dass** am äußeren Ende (21) des Fortsatzes (20) ein Greifabschnitt (22) ausgebildet ist, wobei, vorzugsweise, der Greifabschnitt (22) kreisförmig und/oder oval und/oder ellipsenförmig ausgebildet ist, und/oder wobei, vorzugsweise, der Greifabschnitt (22) auf Höhe des äußeren Endes (13") eines zweiten Flächenabschnitts (11") ausgebildet ist.

5. Gassackmodul nach einem der vorhergehenden Ansprüche, **dadurch gekennzeichnet, dass** anstelle des Fortsatzes (20) entlang der Schwächungskontur (25) eine Risskante ausgebildet ist.

6. Gassackmodul nach einem der vorhergehenden Ansprüche, **dadurch gekennzeichnet, dass** der gefaltete Gassack an einem Modulträger (30) befestigt ist und zumindest abschnittsweise vom Tuch (10) umhüllt ist, wobei der umhüllte Gassack ein schlaufenförmig gelegtes Rückhalteseil (35) aufweist und das Tuch (10) aus mehreren Flächenabschnitten (11, 11', 11"), gebildet ist, wobei an mindestens einem äußeren Ende (13') eines ersten Flächenabschnitts (11') ein als Positionierungs- und/oder Straffungshilfe für das Rückhalteseil (35) ausgebildeter Fortsatz (20) ausgebildet ist, wobei der Fortsatz (20) unter Bildung einer Faltbiegung (36) zumindest abschnittsweise um das Rückhalteseil (35) gewickelt ist.

7. Gassackmodul nach Anspruch 6, **gekennzeichnet durch** seine Anordnung in einem Modulgehäuse (40), wobei das Modulgehäuse (40) eine Gehäusegrundfläche (41) und mindestens eine Gehäuseseitenfläche (42) aufweist, wobei in der Gehäuseseitenfläche (42) eine Ausnehmung (43) ausgebildet ist, durch welche das Rückhalteseil (35) vom Gehäuseinneren (44) zum Gehäuseäußeren (45) geführt ist, wobei insbesondere außerhalb des Modulgehäuses in der Schlaufe (37) des Rückhalteseils (35) eine Aktivierungseinheit (46) angeordnet ist, derart, dass das Rückhalteseil (35) bei einer Straffung um die Aktivierungseinheit (46) anliegt.

8. Gassackmodul nach einem der vorhergehenden Ansprüche, **dadurch gekennzeichnet, dass** das zu straffende Element (35) ein Rückhalteseil des Gassacks ist.

9. Gassackmodul nach einem der vorhergehenden Ansprüche, **dadurch gekennzeichnet, dass** der Fortsatz (20) nach einem Positionierungs- und/oder Straffungsvorgang vom Tuch (10) entfernbar, insbesondere entlang einer Schwächungskontur (25) abreißbar, ausgebildet ist, und/oder **dadurch gekennzeichnet, dass** der Fortsatz (20) abgerissen ist, und anstelle des Fortsatzes (20) entlang einer/der Schwächungskontur (25) eine Risskante ausgebildet ist.

10. Fahrzeuginsassenrückhaltesystem, insbesondere Fahrerairbagsystem, mit einem Gassackmodul nach einem der vorhergehenden Ansprüche.

11. Verfahren zur Herstellung eines Gassackmoduls mit folgenden Schritten:
- Falten eines Gassacks,
- Positionieren des gefalteten Gassacks in Relation zu einem Tuch (10), das mehrere Flächenabschnitte (11, 11', 11") aufweist, derart, dass äußere Enden der Flächenabschnitte (11, 11', 11") über den gefalteten Gassack hinausragen,
- Falten der äußeren Enden der Flächenabschnitte (11, 11', 11") derart, dass der gefaltete Gassack zumindest abschnittsweise umhüllt wird,
**dadurch gekennzeichnet, dass**
- ein am Tuch (10) als Positionierungs- und/oder Straffungshilfe ausgebildeter Fortsatz (20) unter Bildung einer Faltbiegung (36) um ein zu straffendes Element (35) des Gassacks gewickelt bzw. gefaltet wird.

12. Verfahren zur Herstellung eines Gassackmoduls nach Anspruch 11, **gekennzeichnet durch** zumindest einen der folgenden weiteren Schritte:
- abschnittsweises Verbinden, insbesondere Verschweißen der äußeren Enden der Flächenabschnitte (11, 11', 11") mit dem Gassack;
- Anordnen von mindestens zwei Flächenabschnitten derart zueinander, dass diese zumindest abschnittsweise in einem Überlappungsbereich überlappend angeordnet sind, wobei anschließend ein abschnittsweises Verbinden, insbesondere Verschweißen, von mindestens zwei Flächenabschnitten miteinander im Überlappungsbereich erfolgt;
- Vorsehen von Löchern (15) im Bereich der äußeren Enden der Flächenabschnitte (11, 11', 11") und Überziehen der gelochten Enden über Bolzen (31) an einem Bauteil des Gassackmoduls, an dem der Gassack befestigt wird;
- Schritt, bei dem ein Positionieren des umhüllten aufblasbaren Gassacks in einem Modulgehäuse (40) erfolgt, wobei das Modulgehäuse (40) eine Gehäusegrundfläche (41) und mindestens eine Gehäuseseitenfläche (42) aufweist, und in der Gehäuseseitenfläche (42) eine Ausnehmung (43) ausgebildet ist, durch die das Rückhalteseil (35) vom Gehäuseinneren (44) zum Gehäuseäußeren (45) geführt wird;
- Schritt, bei dem in der Schlaufe (37) des Elements (35), das als Rückhalteseil (35) gebildet wird, eine Aktivierungseinheit (46) angeordnet wird, derart, dass das Rückhalteseil (35) bei einer Straffung um die Aktivierungseinheit (46) anliegt, und/oder eine Straffung durch Betätigung des als Positionierungs- und/oder Straffungshilfe für das Rückhalteseil (35) ausgebildeten Fortsatzes (20), wobei die Straffung vorzugsweise durch Ziehen erfolgt, insbesondere durch ein Ziehen am Fortsatz (20); und
- Anbringen eines Abdeckteils über den im Modulgehäuse positionierten Gassack.

13. Verfahren zur Herstellung eines Gassackmoduls nach einem der Ansprüche 11 oder 12, **gekennzeichnet durch** ein Entfernen, insbesondere Abreißen eines/des Fortsatzes (20) entlang einer Schwächungskontur (25), insbesondere nach einer erfolgten Straffung eines Rückhalteseils (35), und dadurch Ausbilden einer Risskante an dem Tuch, vorzugsweise vor einem Anbringen eines Abdeckteils über den im Modulgehäuse positionierten Gassack.

## Claims

1. An airbag module comprising
a module housing (40),
an inflatable airbag for the protection of a person and
a cloth (10) for wrapping the airbag, which is formed of plural surface sections (11, 11', 11") arranged around a cloth center (M),
wherein the wrapped airbag is arranged in the module housing (40),
**characterized in that** the wrapped airbag comprises an element (35) to be tensioned, wherein on at least one outer end (13') of a first surface section (11') of the cloth (10) an extension (20) in the form of a positioning and/or tensioning aid for the element (35) to be tensioned is configured which has a length (L_{FO}) corresponding to at least half the length (L_{FA}) of the first surface section (11'), and is wound around the element (35) to be tensioned at least in portions while forming a folding bend (36).

2. The airbag module according to claim 1, **characterized in that** a weakening contour (25) is formed on the outer end (13') of the first surface section (11') between the extension (20) and the first surface section (11'), wherein the extension (20) is configured to be removable from the cloth (10), preferably after a positioning and/or tensioning operation and in particular to be tearable along the weakening contour (25).

3. The airbag module according to claim 1 or 2, **characterized in that** the four surface sections (11, 11', 11") form a cross shape, and/or **in that** the extension (20) extends in an arc shape, preferably in the direction of a second surface section (11"), wherein preferably an arc length of the extension (20) corresponds at least to the length (L_{FA}) of the first surface section (11').

4. The airbag module according to any one of the preceding claims,
**characterized in that** a gripping portion (22) is formed on the outer end (21) of the extension (20), wherein preferably the gripping portion (22) has a circular and/or oval and/or ellipsoidal shape, and/or wherein preferably the gripping portion (22) is formed level with the outer end (13") of a second surface section (11").

5. The airbag module according to any one of the preceding claims, **characterized in that** instead of the extension (20) a tearing edge is formed along the weakening contour (25).

6. The airbag module according to any one of the preceding claims, **characterized in that** the folded airbag is fastened to a module support (30) and is wrapped at least in portions by the cloth (10), wherein the wrapped airbag includes a restraining rope (35) laid in loops and the cloth (10) is formed of plural surface sections (11, 11', 11"), wherein an extension (20) in the form of a positioning and/or tensioning aid for the restraining rope (35) is configured on at least one outer end (13') of a first surface section (11'), the extension (20) being wound around the restraining rope (35) at least in portions while forming a folding bend (36).

7. The airbag module according to claim 6, **characterized by** its arrangement in a module housing (40), the module housing (40) comprising a housing base area (41) and at least one housing side face (42), wherein a recess (43) through which the restraining rope (35) is guided from the inside (44) to the outside (45) of the housing is formed in the housing side face (42), wherein in particular an activating unit (46) is arranged on the outside of the module housing in the loop (37) of the restraining rope (35) so that upon tensioning the restraining rope (35) is adjacent around the activating unit (46).

8. The airbag module according to any one of the preceding claims, **characterized in that** the element (35) to be tensioned is a restraining rope of the airbag.

9. The airbag module according to any one of the preceding claims, **characterized in that** the extension (20) is configured to be removable from the cloth (10), in particular tearable along a weakening contour (25), after a positioning and/or tensioning operation, and/or **characterized in that** the extension (20) is torn off and a tearing edge is formed instead of the extension (20) along a/the weakening contour (25).

10. A vehicle occupant restraint system, in particular driver airbag system, comprising an airbag module according to any one of the preceding claims.

11. A method for manufacturing an airbag module comprising the following steps:
- folding an airbag,
- positioning the folded airbag relative to a cloth (10) including plural surface sections (11, 11', 11") so that the outer ends of the surface sections (11, 11', 11") project from the airbag,
- folding the outer ends of the surface sections (11, 11', 11") in such a way that the folded airbag is wrapped at least in portions,
**characterized in that**
- an extension (20) formed as a positioning and/or tensioning aid at the cloth (10) is wound around or folded around an element (35) to be tensioned of the airbag while forming a folding bend (36).

12. The method for manufacturing an airbag module according to claim 11, **characterized by** at least one of the following further steps:
- joining in sections, in particular welding the outer ends of the surface sections (11, 11', 11") to the airbag;
- arranging of at least two surface sections relative to each other such that they are arranged to be overlapping at least in portions in an overlapping area, wherein subsequently at least two surface sections are joined, especially welded to each other in portions in the overlapping area;
- providing holes (15) in the area of the outer ends of the surface sections (11, 11', 11") and sliding the ends with holes over bolts (31) of a component of the airbag module to which the airbag is fastened;
- a step in which the wrapped inflatable airbag is positioned in a module housing (40), the module housing (40) comprising a housing base area (41) and at least one housing side face (42), and a recess (43) being formed in the housing side face (42) through which the restraining rope (35) is guided from the inside (44) to the outside (45) of the housing;
- a step in which an activating unit (46) is arranged in the loop (37) of the element (35) configured as the restraining rope (35) so that upon tensioning the restraining rope (35) is adjacent around the activating unit (46) and/or a tensioning is effectuated by activating the extension (20) formed as a positioning and/or tensioning aid for the restraining rope (35), wherein tensioning is preferably effectuated by pulling, especially by pulling the extension (20); and
- attaching a cover member over the airbag positioned in the module housing.

13. The method for manufacturing an airbag module according to any one of the claims 11 or 12, **characterized by** removing, especially tearing off an/the extension (20) along a weakening contour (25), in particular after tensioning of the restraining rope (35) and thereby forming a tearing edge on the cloth, preferably prior to arranging a cover member over the airbag positioned in the module housing.

## Revendications

1. Module airbag avec
un boîtier de module (40),
un airbag gonflable pour la protection d'une personne et
un tissu (10) pour envelopper le coussin de sécurité gonflable, lequel est formé à partir d'une pluralité de sections planes (11, 11', 11") disposées autour d'un point central (M),
pour lequel le coussin gonflable enveloppé est disposé dans le boîtier de module (40),
**caractérisé en ce que** le coussin gonflable enveloppé comprend un élément de serrage (35), pour lequel au moins à une extrémité extérieure (13') d'une première section plane (11') du tissu (10) est formée une extension (20) réalisée pour servir d'aide au positionnement et/ou au serrage de l'élément de serrage (35), présentant une longueur (LFO), qui correspond à au moins la moitié de la longueur (LFA) de la première section plane (11'), et qui est enroulée pour former un pli (36) au moins partiellement autour de l'élément de serrage (35).

2. Module airbag selon la revendication 1, **caractérisé en ce que** à l'extrémité extérieure (13') de la première section plane (11') entre l'extension (20) et la première section plane (11') est réalisé un contour de fragilisation (25), pour lequel ladite extension (20), de préférence après un positionnement et/ou une opération de serrage, est réalisée amovible du tissu (10), et en particulier détachable par déchirement le long du contour de fragilisation (25).

3. Module airbag selon la revendication 1 ou 2, **caractérisé en ce que** les quatre sections planes (11, 11', 11") forment une forme croix, et/ou que l'extension (20), de préférence en direction d'une deuxième section plane (11") s'étende en forme d'arc, pour lequel, de préférence, une longueur d'arc de l'extension (20) correspond au moins à la longueur (L_{FA}) de la première section plane (11').

4. Module de coussin gonflable selon l'une des revendications précédentes, **caractérisé en ce que** à l'extrémité extérieure (21) de l'extension (20) est formée une partie de préhension (22), pour lequel, de préférence la partie de préhension (22) est de forme circulaire et/ou ovale et/ou elliptique. et/ou pour lequel, de préférence, la partie de préhension (22) est formée au niveau de l'extrémité extérieure (13") d'une seconde section plane (11").

5. Module airbag selon l'une des revendications précédentes, **caractérisé en ce que**, à l'emplacement de l'extension (20) est formée une ligne de déchirure le long du contour de fragilisation (25).

6. Module airbag selon l'une des revendications précédentes, **caractérisé en ce que** le coussin gonflable est attaché à un support de module (30) et est au moins partiellement enveloppé par le tissu (10), pour lequel le sac gonflable enveloppé présente une cordelette de retenue (35) en forme de boucle et le tissu (10) est formé d'une pluralité de sections planes (11, 11 ', 11 "), pour lequel au moins à une extrémité extérieure (13') d'une première section plane (11') est formée une extension (20) réalisée pour servir d'aide au positionnement et/ou au serrage de la cordelette de retenue (35), pour lequel l'extension (20) est enroulée formant un pli (36) au moins partiellement autour de la cordelette de retenue (35).

7. Module airbag selon la revendication 6, caractérisé en que par son agencement dans un boîtier de module (40), pour lequel le boîtier de module (40) présente une surface de base de boîtier (41) et au moins une surface latérale de boîtier (42), pour lequel dans la surface latérale de boîtier (42) est réalisée une cavité (43), à travers laquelle la cordelette de retenue (35) est guidée de l'intérieur du boîtier (44) à l'extérieur du boîtier (45), pour lequel en particulier à l'extérieur du boîtier de module dans la boucle (37) de la cordelette de retenue (35) est disposée une unité d'activation (46), de sorte que la cordelette de retenue (35) repose par serrage sur l'unité d'activation (46) .

8. Module airbag selon l'une des revendications précédentes, **caractérisé en ce que** l'élément de serrage (35) est une cordelette de retenue du coussin gonflable.

9. Module airbag selon l'une des revendications précédentes, **caractérisé en ce que** l'extension (20) après un déplacement de positionnement et/ou de serrage est réalisée amovible du tissu (10), plus particulièrement détachable par déchirement le long d'un contour de fragilisation (25), et/ou **caractérisé en ce que** l'extension (20) est déchirée, et que à l'emplacement de l'extension (20) est formé une ligne de déchirure le long du contour de fragilisation (25).

10. Système de retenue d'occupant de véhicule, en particulier système de coussin gonflable de sécurité, avec un module airbag selon l'une des revendications précédentes.

11. Procédé de fabrication d'un module airbag comprenant les étapes consistant à:
- Plier un sac gonflable,
- Positionner le sac gonflable plié par rapport à un tissu (10) ayant une pluralité de sections planes (11,11', 11") de sorte que les extrémités extérieures des sections planes (11, 11', 11") dépassent du sac gonflable plié,
- Plier les extrémités extérieures des sections planes (11, 11', 11") de sorte que le sac gonflable plié soit au moins partiellement enveloppé,
**caractérisé en ce que**
- une extension (20) formée sur le tissu (10) en tant qu'aide au positionnement et/ou au serrage est enroulée ou pliée pour former un pli (36) autour d'un élément de serrage (35) du coussin gonflable.

12. Procédé de fabrication d'un module d'airbag selon la revendication 11, **caractérisé par** au moins l'une des étapes suivantes supplémentaires:
- Raccorder partiellement, en particulier souder les extrémités extérieures des sections planes (11, 11', 11") au coussin gonflable;
- Agencer au moins deux sections planes entre elles, de telle sorte qu'elles sont agencées se recouvrant au moins partiellement dans une région de chevauchement, pour lequel vient par la suite un raccordement partiel, en particulier par soudage, d'au moins deux sections planes ensemble dans la zone de chevauchement;
- Prévoir des trous (15) dans la zone des extrémités extérieures des sections planes (11, 11', 11") et recouvrir les extrémités perforées des boulons (31) du composant du module airbag, sur lequel le coussin gonflable est fixé ;
- Étape par laquelle un positionnement du coussin gonflable enveloppé dans un boîtier de module (40), pour lequel le boîtier de module (40) présente une surface de base de boîtier (41) et au moins une surface latérale de boîtier (42), et pour lequel la surface latérale de boîtier (42) présente une cavité (43), par laquelle la cordelette de retenue (35) est guidée de l'intérieur du boîtier (44) vers l'extérieur du boîtier (45);
- Étape par laquelle dans la boucle (37) de l'élément (35) qui, sera réalisée avec une cordelette de retenue (35), est disposée une unité d'activation (46), disposée de telle sorte que la cordelette de retenue (35) repose par serrage sur l'unité d'activation (46), et/ou un serrage au travers d'un actionnement de l'extension prévue (20) servant d'aide au positionnement et/ou au serrage de la cordelette de retenue (35), pour lequel le serrage est obtenu de préférence par traction, en particulier par traction sur l'extension (20); et
- Fixer un couvercle par dessus le sac gonflable positionné dans le boîtier du module.

13. Procédé de fabrication d'un module airbag selon l'une quelconque des revendications 11 ou 12, **caractérisé en ce que** par un enlèvement, notamment déchirement de l'extension (20) le long d'un contour de fragilisation (25), notamment après un serrage abouti d'une cordelette de retenue (35), et ainsi formant une ligne de déchirure sur le tissu, de préférence avant de fixer un couvercle sur le coussin gonflable positionné dans le boîtier du module.
